# EUROPEAN PATENT APPLICATION

(11) **EP 4 651 488 A1**
(43) Date of publication of application: **19.11.2025**
(21) Application number: 24176125.3
(22) Date of filing: 15.05.2024
(51) Int. Cl.: H04N 19/467, H04N 21/2389, H04N 21/44, H04N 21/442, H04N 21/8358

(54) **DIGITAL WATERMARKING**

(71) Applicant: Sky CP Limited, Isleworth, Middlesex TW7 5QD (GB)
(72) Inventor: JOHNS, Matthew, Isleworth, Middlesex TW7 5QD (GB)
(74) Representative: Cross, James Peter Archibald

(57) **Abstract**

A method of watermarking a video stream comprising a plurality of video frames in sequence, comprising, within a content delivery network, CDN: receiving said video stream; substituting one or more frames of the video stream with one or more corresponding substitute frames, wherein each substitute frame comprises an inter-frame encoded frame including a watermark; and delivering the video stream with the substituted one or more frames to a client device.

## Description

### Field of the Invention

This invention relates generally to content delivery systems, and more particularly to techniques for delivery of digitally protected content in a distributed network.

### Background

Content delivery systems are known, in which content delivery networks (CDNs) are used to provide a content delivery service on behalf of content providers. CDNs are typically a geographically distributed network of proxy servers, such as edge servers, to provide high availability and high performance in the delivery of content such as audio, video or image data.

Content originators may implement schemes to protect the content distributed through the CDNs. Digital Rights Management (DRM) refers to the technology used for the protection of digital media content. DRM works by encrypting the content before distribution, and by limiting access to only those end-users who have acquired a proper license to play the content.

Digital watermarks may be used to verify the authenticity or integrity of the content or to show the identity of its owners and/or intended recipients, which may help ascertain and fix issues if a CDN or DRM is compromised. For example, a recipient-specific digital watermark allows the original source of pirated content to be identified, for example where bad actors resell content to a set of unauthorised users, meaning lost revenue for a media provider.

With the rise of content piracy targeting over-the-top (OTT) streams, there is an ongoing need for content security. Where a pirate is sourcing content directly from the CDN, an objective is to identify the account being used and disrupt the experience of the pirate service.

Recipient-specific or content-specific digital watermarking may also be used to identify content for reasons other than anti-piracy.

### Summary of the Invention

Aspects of the present invention are set out in the accompanying claims.

According to at least some embodiments of the present invention, there is provided a method of watermarking a video stream in a content delivery network by substituting one or more frames with corresponding one or more substitute frames, each including a watermark.

The watermark may be specific to, or identify the context of the delivery of the video stream to a client device. In this way, pirated content may be identified and/or disrupted.

The frequency and/or location of the substitute frames may be dependent on whether the client device is identified as a suspect client device, for example from analysis of behaviour of the client device; in that case, the substitute frames may be sufficient to cause perceptible degradation of the video stream.

The substitute frame(s) may contain no video content but may reference one or more adjacent frame(s) so as to be reproduced based on the content of the adjacent frame(s). The watermark may comprise one or more macroblocks, such as I-macroblocks. This may reduce the processing load of generating and decoding the substitute frames.

Some aspects of the invention include the method steps performed by the content delivery network, a content delivery network arranged to perform those method steps, and a computer program arranged to perform those method steps in the content delivery network.

Other aspects include the method steps performed by the receiving device, the receiving device arranged to perform those method steps, and a computer program arranged to perform those method steps in the receiving device.

### Brief Description of the Drawings

There now follows, by way of example only, a detailed description of embodiments of the present invention, with references to the figures identified below.
Figure 1 is a block diagram showing the main components of a content delivery network system on which embodiments of the invention may be implemented.
Figure 2 is a flow diagram illustrating exemplary processing steps performed by a content server of the system of Figure 1 to substitute specific frames within OTT video stream data, according to an embodiment.
Figure 3 is an illustration of a process by which a watermark is applied to an example segment within an OTT video stream, in an embodiment.
Figure 4 is a diagram illustrating the visual result of the watermarking process.
Figure 5 is a further illustration of a process by which a watermark is applied to an example segment within an OTT video stream.
Figure 6 is a block diagram showing an example of a computer system on which one or more of the functions of the embodiments may be implemented.

### Description of Embodiments

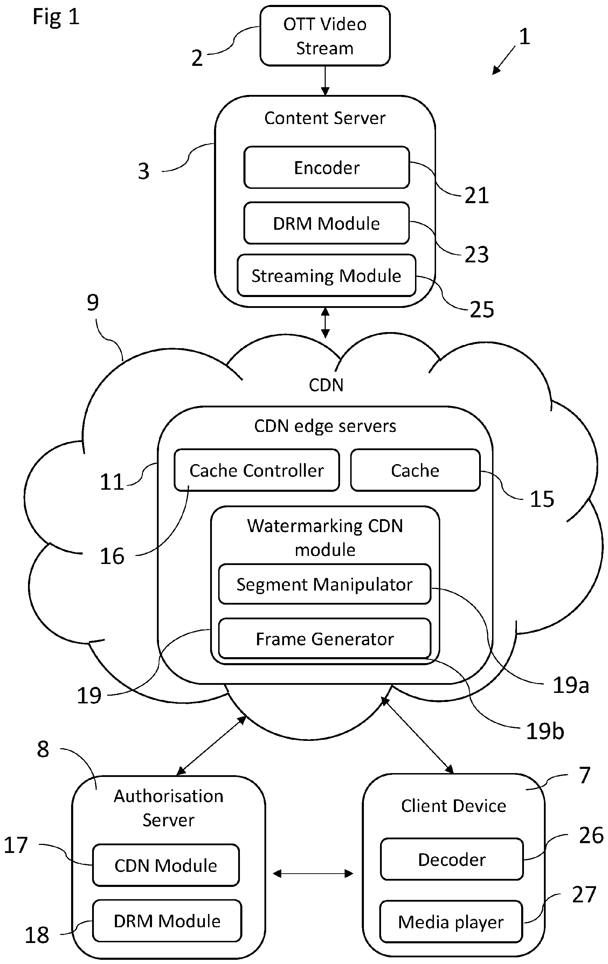

Figure 1 schematically illustrates an exemplary content delivery system 1 in which embodiments described herein may be implemented. The system 1 includes a content server 3 for providing content data, for example from an over-the-top (OTT) video stream 2, to one or more client (or end-user) devices 7 via computing nodes of a content distribution network (CDN) 9. The content server 3 may be one of a plurality of origin servers of a content originator or broadcaster, for example. The content server 3 may include a media encoder 21 to encode source data into an encoded data stream for distribution to the client devices 7 via the CDN network 9, using a streaming module 25. The content server 3 may offload delivery of data from an OTT video stream 2 to a plurality of distributed edge servers 11 of the CDN 9 (also referred to as edge nodes or points of presence).

The CDN edge servers 11 are typically located at respective strategic geographic locations, serving as computing nodes at or near respective edges of the Internet to minimise the physical distance between any given client device 7 and CDN assets. Client devices 7 that request the content may be directed, for example by a Domain Name Server (DNS) or any other form of request-handling mechanism, to the closest CDN edge server 11 to obtain the content data 5. The CDN 9 may implement a distribution infrastructure including on-demand or push-based mechanisms to distribute content from the content servers 3 to CDN edge servers 11, typically over multiple Internet backbones. In this way, latency between the client devices 7 and the CDN 9 and/or the content server 3 is reduced. Furthermore, frequently accessed content may be cached by a cache controller 16 of the CDN edge server 11 in a cache 15, such as a memory, to further improve delivery efficiency of subsequent requests for the same content.

The client devices 7 may access an authorisation server 8 which provides CDN tokens from a CDN module 17 and provides DRM services, such as decryption keys from a DRM module 18.

The streaming module 25 of the content server 3 may be configured to transmit the encoded data stream or OTT video stream 2 as a plurality of data packets, as is well-known in the art. The media player 27 of the client devices 7 may access the OTT video stream 2 using the CDN tokens provided if, for example, the client devices 7 have purchased or obtained playback privileges for the OTT video stream 2. The CDN tokens may determine how the watermarking process is performed, as discussed below.

DRM protection may be applied to encoded on-demand and/or live OTT video streams 2, although these may include segments or portions of DRM-free (also referred to as non-DRM or non-encrypted) content data and/or watermarking data. The client devices 7 access DRM-protected data using the DRM services provided by the authorisation server 8.

The client devices 7 may be any electronic devices suitable for outputting media content, such as a mobile/cellular 'smart' telephone, desktop computer, laptop computer, notepad/tablet computer, personal digital assistant (PDA), set-top box (STB), television, or the like. The client device 5 may have media player software to request, receive and display content received from the content server 3 via the CDN 7.

The CDN 9, the content server 3, and the client devices 7 may each include other components, sub-components, modules, and devices commonly found in respective components of the system 1, which are not illustrated in Figure 1 for clarity of the description.

OTT video streams 2 may be encoded using video encoding, so as to reduce bandwidth requirements. The video encoding may be in any of a number of video coding formats, such as Advanced Video Coding (H.264 / MPEG-4 AVC), High Efficiency Video Coding (H.265 / MPEG-H HEVC); and may be in any one of a number of container formats, such as MP4, fragmented MP4 (fMP4), QuickTime Movie (MOV), Audio Video Interleave (AVI), Flash Video Format (FLV), or WebM. The video encoding may be performed at the source of the OTT video stream 2, at the content server 3, the CDN edge servers 11, or any suitable node that delivers the OTT video stream 2.

Compressed video encoding typically includes inter-frame encoding in which the coding of at least one of the frames references the content of one or more adjacent frames. For example, the frames may be encoded as intra-coded picture frames (i.e. full images or I-frames), predictive coded picture frames (P-frames) which reference the previous frame, or bidirectional predicted frames (B-frames) which reference both the preceding and following frames. The frames may be grouped together in a group of pictures (GOP) which is a self-contained sequence of frames which ends in an I or P-frame and does not reference any frame outside the GOP, at least for inter-frame encoding. Within the OTT video stream, one or more GOPs may be grouped together into segments.

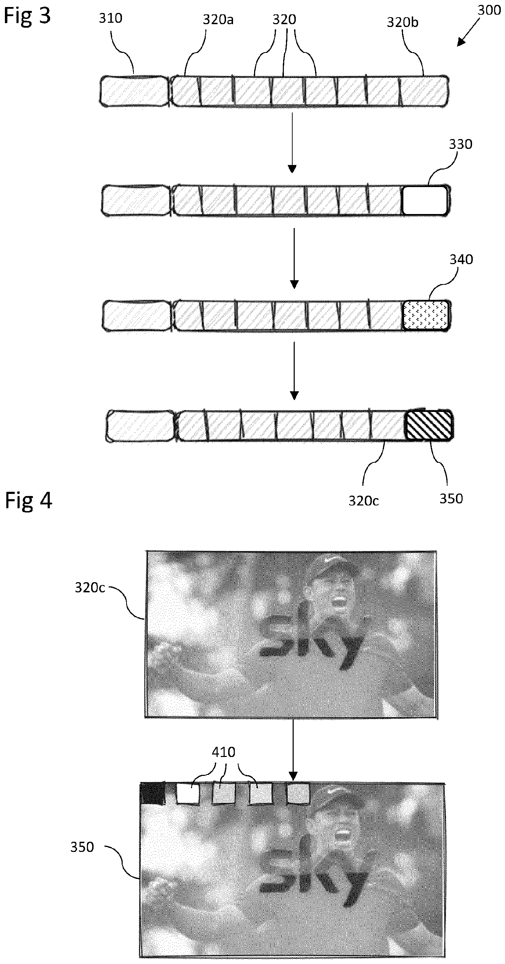

In one example, each segment may comprise data in a video format such as MP4 or fMP4. For example, fMP4 segments 300 can be used and include a moof header 310 followed by 8 frames 320 as shown in Figure 3. The fMP4 segment 300 may comprise more or less than 8 frames 320 and other types of headers. The moof header 310 contains metadata for the segment 300 and may be a movie fragment box or the like. The first frame 320a of the segment 300 may be an Instantaneous Decoder Refresh (IDR) frame which clears the previous raw data from the decoder 26 so that no previous frame can be referenced by the decoder 26 for decoding. Each segment 300 therefore is separately decoded by the decoder 26 at the start of each segment 300.

Each CDN edge server 11 may include or be connected to a watermarking module 19 to apply digital watermarking to a selected portion (e.g. selected frames) of a plurality of segments of the received OTT video stream. The watermarking module 19 may generate replacement frames to be inserted into the selected portion of the plurality of segments in place of selected frames of video content. The replacement frames may be specific to the intended recipient of the content data, such as the requesting end-user and/or client device 7.

The watermarking CDN module 19 may include one or more sub-modules, such as a segment manipulator 19a and a frame generator 19b for embedding replacement or substitute frames into the received video stream.

Frames in a selected portion of a segment or of a GOP in a segment may be removed, deleted, or dropped and substituted with alternative frames, such as P-frames. For example, the final frame of a GOP within a segment may be dropped and replaced by a substitute P-frame. This substitute P-frame may include Skip macroblocks (i.e. macroblocks containing no information) to reference the contents of a previous frame to the dropped frame and encode an overlay comprising I-macroblocks such that these are reproduced over the content of the previous frame when decoded by the client device 7. This produces a visual distortion effect which is viewed as a 'stuck frame' because the last two frames of the GOP are repeated. The overlay may be personalised to the client device 7 and may contain data identifying the client device, which would be recoverable from a recording of the overlay.

The substitute frame need not be DRM protected, particular if it contains no video content but only the watermark. In the case of fMP4, a dropped DRM-protected frame may be substituted by an unprotected substitute frame containing the watermark.

The number, frequency and/or location of substitute frames may be varied depending on information relating to the client device 7, indicating for example whether the client device 7 is suspected of being involved in unauthorised activity. This may be determined for example by analysis of client device 7 activity. In that case, the number of substitute frames delivered to suspect client devices 7 may be high enough to be excessively detrimental to the quality of the OTT video stream 2 if some or all of the potentially substituted frames were dropped in an attempt to erase the watermark. This approach therefore can be used to severely degrade the quality of the OTT video stream 2 accessed by suspect client devices 7.

The number of substitute frames included in the OTT video stream 2 delivered to authorised client devices 7 that are not suspect may be low enough to be acceptable to authorised customers. For example, only one GOP in a segment or in a group of segments may contain a substituted frame so that the substituted frame can be identified while the video stream can be viewed relatively uninterrupted. In this way, authorised users and client devices 7 that are not suspect may access and view the OTT video stream 2 with an acceptable level of disruption caused by the substitute frames.

The client devices 7 may have a range of processing characteristics, meaning some client devices 7 may require more processing power than other more efficient client devices 7 when encoding or decoding incoming data. Real-time encoding and decoding has intensive processing requirements in order to keep up with the high level of incoming data from the content server 3 via CDN edge servers 11. The substitute frames, such as substitute P-frames, may have a low data content since they need only encode the I-macroblocks within the frame, which advantageously reduces the processing requirements for decoding in the client devices 7.

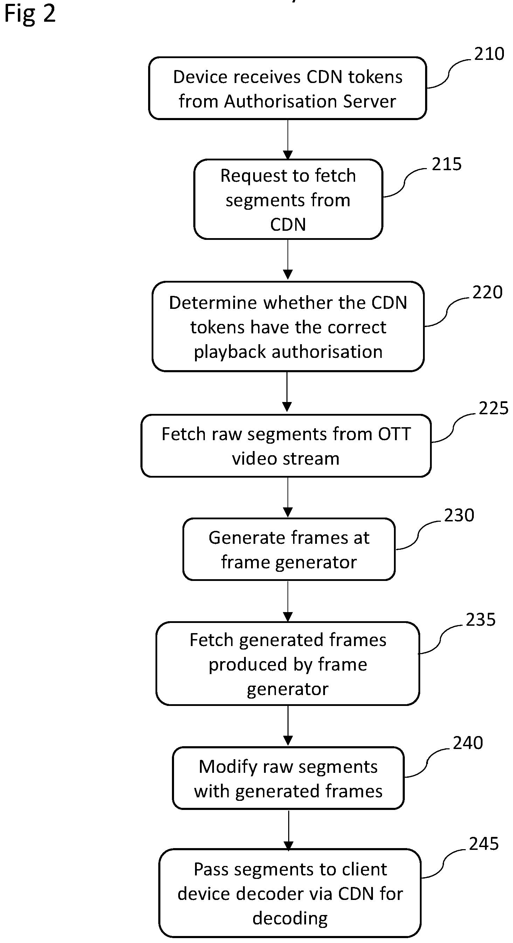

Figure 2 is a flow diagram illustrating a computer implemented process for the watermarking system in an embodiment performed by the components of Figure 1. In an embodiment, a client device 7 requests an OTT video stream 2. The client device 7 receives, from the authorisation server 8, at step 210 CDN tokens containing parameters and context data associated with the OTT video stream 2, including any relevant licences to which the client device 7 is entitled to.

At step 215, the client device 7 requests to fetch segments 300 of the OTT video stream 2 from one or more CDN edge servers 11. The CDN tokens may be integrated into the request. At 220, the CDN edge server 11 checks the CDN tokens for the correct privileges to allow access to the OTT video stream 2.

The CDN edge server 11 may fetch raw segments 300 from the OTT video stream 2 via the content server 3 at step 225. In the example where the client device 7 is authorised to access the OTT video stream 2, a number of the fetched raw segments may be unchanged in accordance with the pre-determined schedule or strategy in the received CDN tokens. Another group of fetched segments may be passed to a segment manipulator 19a of the watermarking module 19 at 230 for modification. For example, for every 9 or 10 fetched segments, one segment may be passed to the segment manipulator 19a. The segments that are to be modified may be passed to the segment manipulator 19a in real time corresponding to the delivery of the data from the OTT video stream 2.

One or more of the frames 320b in the group of segments passed to the segment manipulator 19a may be dropped, removed, or deleted from of each segment 300. For example, the last one frames 320b of each segment 300 of the second plurality of segments may be dropped.

At step 230, a frame generator 19b of the watermarking module 19 may produce or generate one or more substitute frames 340. The substitute frames 340 are fetched by the segment manipulator 19a once generated at 235.

The substitute frames 340 may comprise P-frames that comprise one or more I-macroblocks 410 to act as an embedded watermark, which is reproduced as a visual overlay as can be seen in Figure 4. Apart from the watermark the substitute frames 340 may contain no video data but instead reference the content of the previous frame. Where multiple substitute frames are provided, these may be identical to or different from each other.

The form of the watermark, such as form example the number and/or location of the macroblocks within the substitute frame 340, may be dependent on the context of the delivery of the video stream to the client device 7. For example, the form of the watermark may identify the client device 7, a subscriber account associated with the client device 7 and/or the session in which the video stream is delivered to the client device. Alternatively, the form of the watermark may be dependent only on the video stream i.e. so that the same watermark is provided in the same video stream or content delivered to all or some of the client devices 7.

At step 240, the segment manipulator 19a of the watermarking module 19 inserts the substitute frames 340 in place of the dropped frames 320b, for example using the same presentation time stamp as the dropped frame 320b and modifying the moof header 310 to reflect the substitution applied.

At step 245, the now modified segments are passed by the CDN edge servers 11 to the client device 7 for decoding by decoder 26 in sequence with the non-modified segments of the OTT video stream 2. The non-modified segments are decoded by the decoder 26 as normal. In the decoding process of each modified segment, the decoder 7 decodes the substitute frame by copying the previous frame 320c directly before the substitute frame 320b and adding the overlay encoded in the substitute frame 340. This is viewed in the OTT video stream 2 as a stutter or lag at intervals in the OTT video stream 2. The visual overlay provided by the substitute frame 350 can be seen for example in Figure 4.

As the decoding process simply involves copying the previous frame 320c and adding the overlay, the processing requirements of the decoder 7 are reduced.

Alternatively, the CDN edge servers 11 may modify most or all of the raw segments 300 from the content server 3 to produce a longer and more disruptive stutter or lag in the OTT video stream 2. This may be employed, for example, where at step 220 some client devices 7 are determined to not have the correct privileges to access the OTT video stream 2 and may thus be suspected pirate devices. For example, selected frames in all segments or all GOPs within each segment may be modified. In addition, the number of modified frames may be increased per segment or per GOP from one frame up to all frames.

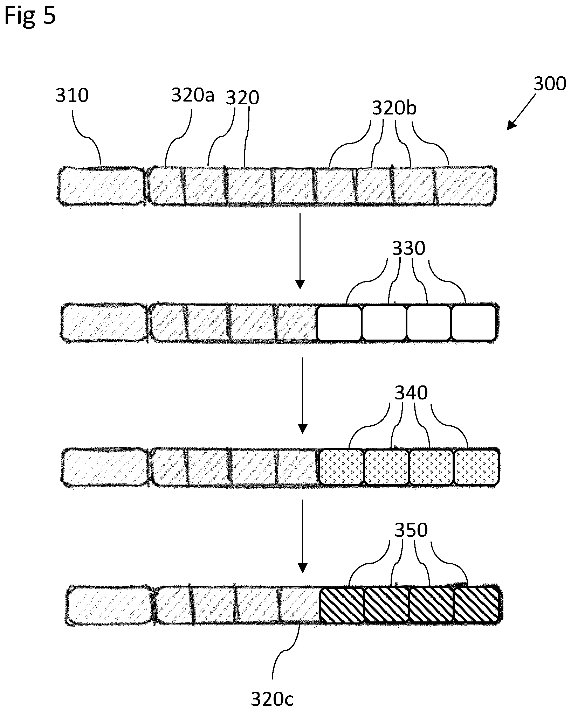

In one example, the last four frames 320 in a segment 300 may be dropped by the segment manipulator 19a at step 225, equating to half the frames 320 of each segment 300 as shown in Figure 5. The segment 300 will then comprise four gaps 330 where the dropped frames 320b previously resided.

At step 230, the frame generator 19b of the watermarking module 19 may produce or generate one or more frames 340 that are fetched by the segment manipulator 19a at step 235.

At step 240, the segment manipulator 19a of the watermarking module 19 may modify each segment 300 by inserting the substitute frames 340 produced by the frame generator 19b into the gaps 330.

At step 245, the segments 300 are then passed by the CDN edge servers 11 to the decoder 26 of the device 7 for decoding as described above.

As shown in Figure 5, the frame directly before the forward-most dropped frame corresponds to the fourth frame 320c in sequence the segment 300 since the final four frames (i.e. the fifth, sixth, seventh, and eighth frames 320b) are all dropped. By using the previous frame 320c, the decoder can reuse data that has already been received. This, combined with the fact that the substitute frames 340 contain less data than regular frames 320, results in less data for the decoder 7 to process. Moreover, the more frames that are dropped from each segment, the less data is contained within each segment because there are fewer regular frames and because the substitute frames 340 contain less data than the regular frames 320, further reducing decoding and processing requirements.

Although the above embodiment is disclosed in the context of detecting or disrupting pirated content, a similar watermarking system may be used to identify content for other purposes, for example for watermarking advertising content inserted in a video stream.

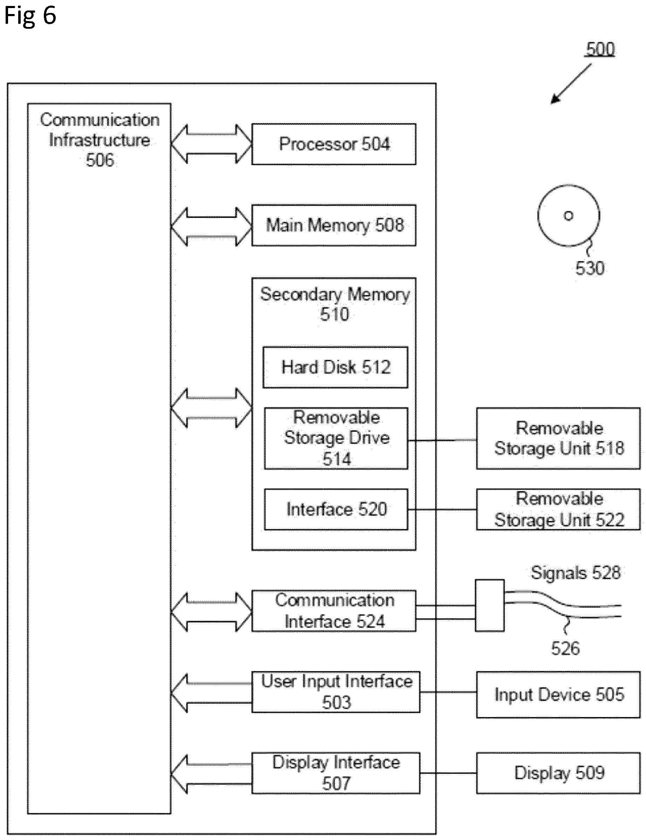

Figure 6 illustrates an example computer system 500 in which embodiments of the present invention, or portions thereof, can be implemented as computer-readable code to program processing components of the computer system 500. Various embodiments of the invention are described in terms of this example computer system 500. For example, the content server 3, CDN 9, CDN edge servers 11, and client devices 7 of Figure 1 can each be implemented in a respective system 500. The methods illustrated by the flowchart of Figure 2 can also be implemented in a respective system 500. After reading this description, it will become apparent to a person skilled in the relevant art how to implement the invention using other computer systems and/or computer architectures.

Computer system 500 includes one or more processors, such as processor 504. Processor 504 can be a special purpose or a general-purpose processor. Processor 504 is connected to a communication infrastructure 506 (for example, a bus, or network). Computer system 500 also includes a user input interface 503 connected to one or more input device(s) 505 and a display interface 507 connected to one or more display(s) 509, which may be integrated input and display components. Input devices 505 may include, for example, a pointing device such as a mouse or touchpad, a keyboard, a touchscreen such as a resistive or capacitive touchscreen, etc. According to an embodiment, computer display 530, in conjunction with display interface 502, can be used to display UI 115 on operator console 110.

Computer system 500 also includes a main memory 508, preferably random access memory (RAM), and may also include a secondary memory 510. Secondary memory 510 may include, for example, a hard disk drive 512, a removable storage drive 514, flash memory, a memory stick, and/or any similar non-volatile storage mechanism. Removable storage drive 514 may comprise a floppy disk drive, a magnetic tape drive, an optical disk drive, a flash memory, or the like. The removable storage drive 514 reads from and/or writes to a removable storage unit 518 in a well-known manner. Removable storage unit 518 may comprise a floppy disk, magnetic tape, optical disk, etc. which is read by and written to by removable storage drive 514. As will be appreciated by persons skilled in the relevant art(s), removable storage unit 518 includes a non-transitory computer usable storage medium having stored therein computer software and/or data.

In alternative implementations, secondary memory 510 may include other similar means for allowing computer programs or other instructions to be loaded into computer system 500. Such means may include, for example, a removable storage unit 522 and an interface 520. Examples of such means may include a program cartridge and cartridge interface (such as that found in video game devices), a removable memory chip (such as an EPROM, or PROM) and associated socket, and other removable storage units 522 and interfaces 520 which allow software and data to be transferred from the removable storage unit 522 to computer system 500.

Computer system 500 may also include a communications interface 524 implemented for example at the operating system level to allow data to be transferred between computer system 500 and external devices, for example as signals 528 over a communication channel 526. Communications interface 524 may include a modem, a network interface (such as an Ethernet card), a communications port, a PCMCIA slot and card, or the like.

Various aspects of the present invention can be implemented by software and/or firmware (also called computer programs, instructions or computer control logic) to program programmable hardware, or hardware including special-purpose hardwired circuits such as application-specific integrated circuits (ASICs), programmable logic devices (PLDs), field-programmable gate arrays (FPGAs), etc. of the computer system 500, or a combination thereof. Computer programs for use in implementing the techniques introduced here may be stored on a machine-readable storage medium and may be executed by one or more general-purpose or special-purpose programmable microprocessors. The terms "computer program medium", "non-transitory computer readable medium" and "computer usable medium" introduced herein can generally refer to media such as removable storage unit 518, removable storage unit 522, and a hard disk installed in hard disk drive 512. Computer program medium, computer readable storage medium, and computer usable medium can also refer to memories, such as main memory 508 and secondary memory 510, which can be memory semiconductors (e.g. DRAMs, etc.). These computer program products are means for providing software to computer system 500.

Computer programs are stored in main memory 508 and/or secondary memory 510. Computer programs may also be received via communications interface 524. Such computer programs, when executed, enable computer system 500 to implement the present invention as described herein. In particular, the computer programs, when executed, enable processor 504 to implement the processes of embodiments of the present invention as described above. Accordingly, such computer programs represent controllers of the computer system 500. Where the invention is implemented using software, the software may be stored in a computer program product and loaded into computer system 500 using removable storage drive 514, interface 520, hard drive 512, or communications interface 524.

Embodiments of the invention employ any computer useable or readable medium, known now or in the future. Examples of computer useable mediums include, but are not limited to, primary storage devices (e.g., any type of random access memory), secondary storage devices (e.g., hard drives, floppy disks, CD ROMS, ZIP disks, tapes, magnetic storage devices, optical storage devices, MEMS, nano-technological storage device, etc.), and communication mediums (e.g., wired and wireless communications networks, local area networks, wide area networks, intranets, etc.).

## Claims

1. A method of watermarking a video stream comprising a plurality of video frames in sequence, the method comprising, within a content delivery network, CDN:
receiving said video stream;
substituting one or more frames of the video stream with one or more corresponding substitute frames, wherein each substitute frame comprises an inter-frame encoded frame including a watermark; and
delivering the video stream with the substituted one or more frames to a client device.

2. The method of claim 1, including receiving a request for the video stream from the client device, the request including at least one authorisation token; wherein the video stream is delivered to the client device in response to validation of the at least one authorisation token.

3. A method of receiving a watermarked video stream at a client device, the method comprising:
requesting a video stream from a content delivery network, CDN,
receiving from the CDN the requested video stream including one or more substitute frames, wherein each substitute frame comprises an inter-frame encoded frame including a watermark, and
decoding the video stream so as to reproduce each substitute frame.

4. The method of claim 3, wherein the substitute frame is reproduced from an adjacent frame with the addition of the watermark.

5. The method of any preceding claim, wherein the watermark is indicative of a context of the delivery of the video stream to the client device, optionally wherein the context comprises one or more of an identity of the client device, a subscriber account and a session in which the video stream is delivered to the client device.

6. The method of any preceding claim, wherein the substitution is dependent on identification of the client device as a suspect client device, optionally wherein the frequency and/or location of the substitute frames is dependent on identification of the client device as a suspect client device; and/or wherein the client device is identified as a suspect client device based on analysis of behaviour of said client device and/or of a subscriber account associated with said client device.

7. The method of any preceding claim, wherein the video stream includes a plurality of segments each including one or more groups of pictures, GOP, wherein the substitute frame or frames comprise at least a final frame or frames within the one or more GOP.

8. The method of any preceding claim, wherein the video content of each substitute frame consists solely of the watermark and a reference to the video content of an adjacent frame.

9. The method of any preceding claim, wherein the watermark comprises one or more macroblocks.

10. The method of claim 9, wherein the macroblocks comprise Skip macroblocks.

11. The method of claim 9 or claim 10, wherein the macroblocks comprise I-macroblocks.

12. A CDN arranged to perform the method of any one of claims 1-2 or 5-11 when dependent thereon.

13. A client device arranged to perform the method of any one of claims 3-4 or 5-11 when dependent thereon.

14. A computer readable medium storing computer program code arranged to perform the method of any one of claims 1-2 or 5-11 when dependent thereon, when executed by one or more processors within the CDN.

15. A computer readable medium storing computer program code arranged to perform the method of any one of claims 3-4 or 5-11 when dependent thereon, when executed by one or more processors of the client device.
